# EUROPÄISCHE PATENTSCHRIFT

(11) **EP 3 374 666 B1**
(45) Veröffentlichungstag und Bekanntmachung des Hinweises auf die Patenterteilung: **24.06.2020**
(21) Anmeldenummer: 16805275.1
(22) Anmeldetag: 08.11.2016
(51) Int. Cl.: F16H 7/12, F02B 67/06

(54) **SPIELFREIE PENDELLAGERUNG AM ENTKOPPLUNGSSPANNER**
CLEARANCE-FREE SELF-ALIGNING BEARING ON THE DECOUPLING TENSIONER
MONTAGE OSCILLANT SANS JEU AU NIVEAU D'UN TENDEUR DE DÉCOUPLAGE

(30) Priorität: 11.11.2015 DE 102015222203
(43) Veröffentlichungstag der Anmeldung: 19.09.2018
(73) Patentinhaber: Schaeffler Technologies AG & Co. KG, 91074 Herzogenaurach (DE)
(72) Erfinder: HAUCK, Christian, 90518 Altdorf (DE)
(86) Internationale Anmeldenummer: PCT/DE2016/200501
(87) Internationale Veröffentlichungsnummer: WO 2017/080551

(56) Entgegenhaltungen:
- EP-B1- 2 557 295
- DE-A1-102009 020 589
- DE-A1-102012 209 028
- DE-A1-102013 002 993

## Beschreibung

Die Erfindung betrifft einen Pendelspanner für einen Endloszugmitteltrieb, vorzugsweise einen Endlosriementrieb einer Verbrennungskraftmaschine, wie einem Diesel- oder Ottomotor, eines Kraftfahrzeuges, wie einen Pkw, Lkw, Bus, ein landwirtschaftliches Nutzfahrzeug oder ein Motorrad, mit einer Basiseinheit und einem dazu separaten, ringförmig ausgebildeten Spanner, wobei der Spannarm in einem Gleitlagerungsbereich der Basiseinheit zum Ermöglichen einer Drehbewegung relativ zu der Basiseinheit gleitend gelagert ist.

Solche Pendelspanner, die auch als Pendelrollenspanner oder Ringspanner bezeichnet sind, sind aus dem Stand der Technik bereits in verschiedenen Ausführungen bekannt. In diesem Zusammenhang offenbart bspw. die DE 10 2011 084 680 B3 eine Spannvorrichtung für einen Riementrieb, der einen endlos umlaufenden Riemen, eine Elektromaschine mit einem Maschinengehäuse und einem Antriebsrad und zumindest ein weiteres Triebrad aufweist, das über den Riemen mit dem Antriebsrad in Antriebsverbindung steht. Die Spannvorrichtung an sich umfasst ein Spannergehäuse, das mittels einer Gleitlagerung um die Achse des Antriebsrads verschwenkbar gegenüber dem Maschinengehäuse gelagert ist, zwei Spannrollen, die den Riemen in dessen Umlaufrichtung vor und hinter dem Antriebsrad mit Vorspannkraft beaufschlagen, ein die Vorspannkraft erzeugendes Federmittel, einen gegen die Kraft des Federmittels beweglich im Spannergehäuse gelagerten Spannarm, wobei eine der Spannrollen auf dem Spannarm gelagert ist und die andere Spannrolle ortsfest auf dem Spannergehäuse gelagert ist, und einen das Spannergehäuse axial überspannenden Lagerträger.

Die DE 10 2012 209 028 A1 offenbart einen Pendelspanner, dessen Spannergehäuse mit der Elektromaschine in einem federbelasteten Reibkontakt steht.

Weiterer Stand der Technik ist auch aus der EP 2 557 295 B1 sowie der DE 10 2012 209 028 A1 bekannt.

Als Nachteil gegenüber dem Stand der Technik hat es sich jedoch herausgestellt, dass in der Gleitlagerung häufig ein toleranzbedingtes, radiales sowie axiales Spiel vorhanden ist. Bei jedem hochfrequenten Schwingvorgang des Pendelspanners läuft dieser durch einen Nullpunkt, in dem keinerlei radiale sowie axiale Kräfte auf die Lagerstelle zwischen dem Spannarm und der Basiseinheit / dem Gleitlagerungsbereich wirken. Dies hat wiederum zur Folge, dass bei einer bestimmten Schwingungsanregung des Pendelspanners dieser in der Lagerluft in Resonanz gerät. Als Folge kommt es dann zu einem Klappern oder gar zu einem signifikant erhöhten Verschleiß der Gleitlagerung.

Es ist daher die Aufgabe der vorliegenden Erfindung, diese aus dem Stand der Technik bekannten Nachteile zu beheben und insbesondere einen Pendelspanner zur Verfügung zu stellen, dessen Spannarm möglichst spielfrei über jegliche Betriebszustände hinweg gelagert sein soll.

Dies wird erfindungsgemäß durch zumindest ein Federelement gelöst, das in einem Radialspalt und/oder in einem Axialspalt zwischen dem Gleitlagerungsbereich und dem Spannarm eingesetzt ist und die Basiseinheit und den Spannarm gegeneinander verspannt. Dies bedeutet, dass die zwischen Spannarm und Basiseinheit vorhandene / eingesetzte Gleitlagerung federnd vorgespannt ist und dass das Federelement ohne großartige Veränderungen der bestehenden Pendelspannerausführung vielseitig einsetzbar ist.

Dadurch ist es möglich die Lagerluft zumindest in einer radialen oder axialen Richtung, oder sowohl in radialer als auch axialer Richtung zu eliminieren. Die Pendeldämpfung wird gezielt eingestellt bzw. die Eigenresonanz der Lagerung in einen Frequenzbereich ' verschoben, der außerhalb der Betriebsfrequenzen liegt. Durch diese Veränderung des Resonanzverhaltens werden Klappergeräusche während des Betriebes des Pendelspanners deutlich reduziert.

Weitere vorteilhafte Ausführungsformen sind in den Unteransprüchen beansprucht und nachfolgend näher erläutert.

Dementsprechend ist es auch vorteilhaft, wenn das zumindest eine Federelement eine als Gleitfläche ausgelegte Oberfläche besitzt. Dadurch ist das Federelement in einem besonders engen Bauraum integrierbar. Ist die Gleitfläche dabei vorzugsweise in radialer Richtung und / oder in axialer Richtung an dem Gleitlagerungsbereich oder dem Spannarm abgestützt / anliegend, kann das Federelement besonders gezielt eingesetzt werden. In einer weiteren Ausführungsform kann das zumindest eine Federelement auch zwei Gleitflächen aufweisen, die jeweils an einer von zwei entgegengerichteten Oberflächen angeordnet sind. Dadurch ist eine besonders verschleißarme Ausbildung des Federelementes umgesetzt.

In diesem Zusammenhang ist es auch zweckmäßig, wenn das zumindest eine Federelement eine Federkraft in Radialrichtung (radialer Richtung der Drehachse des Spannarms) und/oder in Axialrichtung (axialer Richtung der Drehachse des Spannarms) zwischen der Basiseinheit und dem Spannarm aufbringt. Dadurch ist das Federelement besonders effektiv eingesetzt.

Zudem ist es von Vorteil, wenn ein erstes Federelement in einem Radialspalt zwischen dem Gleitlagerungsbereich und dem Spannarm angeordnet ist und ein zweites Federelement in einem Axialspalt zwischen dem Gleitlagerungsbereich und dem Spannarm angeordnet ist. Dadurch sind zumindest zwei Federelemente in dem Pendelspanner eingesetzt, die den Spannarm relativ zu dem Gleitlagerungsbereich in der jeweiligen Richtung stabil abstützen. Dadurch ist eine besonders effektive Reduktion des Lagerspiels sowohl in radialer als auch in axialer Richtung umgesetzt.

Als besonders langlebig für den Einsatz des Pendelspanners hat es sich herausgestellt, wenn das zumindest eine Federelement als eine Wellfeder ausgebildet ist.

Zweckmäßig ist es auch, wenn das zumindest eine Federelement ringförmig oder scheibenförmig ausgestaltet ist, wodurch es platzsparend in einen Radial- oder Axialspalt zwischen dem Gleitlagerungsbereich und dem Spannarm einsetzbar ist.

In diesem Zusammenhang ist es weiterhin vorteilhaft, wenn die Wellfeder ringförmig ausgestaltet ist, wobei deren (Innen- und Außen-)Durchmesser sich in Umfangsrichtung wellenförmig verändert. Ist die Wellfeder scheibenförmig ausgestaltet, ist es vorteilhaft, wenn deren axialen Seitenwände sich in Umfangsrichtung wellenförmig (gebogen) verlaufen. Dadurch ist das zumindest eine Federelement kompakt sowie kostengünstig hergestellt.

Weiterhin vorteilhaft ist es, wenn das zumindest eine Federelement mittels einer Verdrehsicherung mit dem Gleitlagerungsbereich oder dem Spannarm verbunden ist. Dadurch ist ermöglicht, dass nur eine Oberfläche des zumindest einen Federelementes gezielt als Gleitfläche ausgestaltet ist, wodurch die Herstellkosten weiter gesenkt werden.

Insbesondere ist es in diesem Zusammenhang von Vorteil, wenn das zumindest eine Federelement durch eine formschlüssige Verbindung (in Drehrichtung des Spannarmes relativ zur Basiseinheit) an dem Gleitlagerungsbereich oder dem Spannarm verdrehsicher festgelegt / gehalten ist. Denn dann ist die Verdrehsicherung einfach hergestellt.

Weiterhin ist es vorteilhaft, wenn das zumindest eine Federelement an einem Gleitbelag des Spannarms abgestützt ist / anliegt. Denn dadurch kann der Verschleiß des Gleitlagerungsbereiches weiter reduziert werden.

Die Erfindung wird nun nachfolgend anhand von Figuren näher erläutert, in welchem Zusammenhang auch verschiedene Ausführungsbeispiele prinzipiell beschrieben sind.

Es zeigen:
- Fig. 1: eine perspektivische Ansicht eines erfindungsgemäßen Pendelspanners nach einem bevorzugten Ausführungsbeispiel, wobei der Pendelspanner von einer Seite gezeigt ist, an der der Spannarm stirnseitig zu erkennen ist,
- Fig. 2: eine perspektivische Darstellung des teilweise in Längsrichtung geschnitten dargestellten Pendelspanners nach Fig. 1, wobei die Gleitlagerstelle zwischen einem Gleitlagerungsbereich der Basiseinheit des Pendelspanners und dem Spannarm zu erkennen ist,
- Fig. 3: eine Detailansicht des in Fig. 2 mit "III" gekennzeichneten Bereiches, der die in einem Axialspalt sowie einem Radialspalt zwischen der Basiseinheit und dem Spannarm eingesetzten Federelemente erkennen lässt,
- Fig. 4: eine Längsschnittdarstellung des erfindungsgemäßen Pendelspanners nach Fig. 1,
- Fig. 5: eine Detaildarstellung des in Fig. 4 mit "V" gekennzeichneten Bereiches, in dem die beiden Federelemente, wie sie zwischen dem Gleitlagerungsbereich und dem Spannarm eingesetzt sind, deutlich erkennbar sind,
- Fig. 6: eine perspektivische Darstellung eines Teils des Pendelspanners nach Fig. 1, wobei die Anordnung des ersten Federelementes, wie es in einem Radialspalt zwischen dem Spannarm und dem Basisabschnitt / dem Gleitlagerungsbereich der Basiseinheit eingesetzt ist, bereits erkennbar ist,
- Fig. 7: eine perspektivische Darstellung eines Umfangsbereiches des Pendelspanners nach Fig. 1, in einem Gleitlagerungsbereich der Basiseinheit, wobei auf die Darstellung des Spannarmes verzichtet ist, sodass besonders gut die beiden Federelemente in Form von Wellfedern erkennbar sind,
- Fig. 8: nochmals eine perspektivische Darstellung des Umfangsbereiches des Pendelspanners ähnlich zu Fig. 7, wobei der Umfangsbereich nun in einem anderen Winkel dargestellt ist, sodass insbesondere die wellige Erstreckung des, in einem Axialspalt als Axialfeder dienenden, zweiten Federelementes erkennbar ist,
- Fig. 9: wiederum eine perspektivische Darstellung des Pendelspanners nach Fig. 1, wobei die Verdrehsicherung des in einem Radialspalt angeordneten ersten Federelementes relativ zu der Basiseinheit erkennbar ist,
- Fig. 10: eine perspektivische Darstellung des ersten Federelementes, wie es in dem Pendelspanner nach Fig. 1 eingesetzt ist, und
- Fig. 11: eine perspektivische Darstellung des zweiten Federelementes, wie es in dem Pendelspanner nach Fig. 1 eingesetzt ist.

Die Figuren sind lediglich schematischer Natur und dienen ausschließlich dem Verständnis der Erfindung. Die gleichen Elemente sind mit denselben Bezugszeichen versehen.

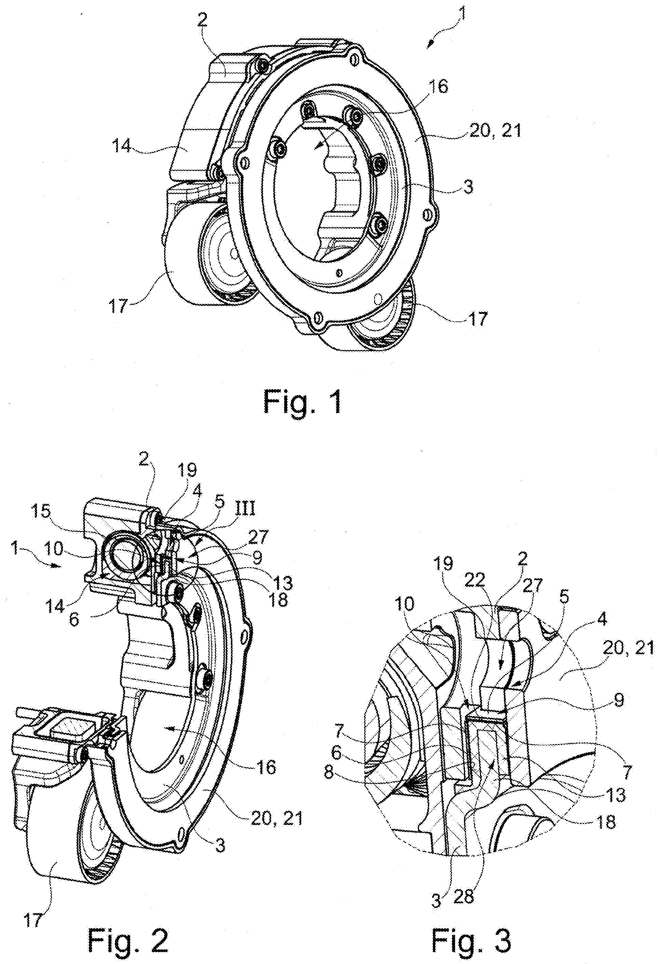

In Fig. 1 ist ein erfindungsgemäßer Pendelspanner 1 nach einem bevorzugten Ausführungsbeispiel veranschaulicht. Der Pendelspanner 1 ist dabei als ein Pendelriemenspanner ausgestaltet und dient folglich im Betrieb zum Vorspannen eines als Riemen ausgebildeten Endloszugmittels eines Endloszugmitteltriebes / Riementriebes. Der Endloszugmitteltrieb, der hier der Übersichtlichkeit halber nicht weiter dargestellt ist, verbindet im Betrieb einer Verbrennungskraftmaschine vorzugsweise eine Ausgangswelle / Kurbelwelle der Verbrennungskraftmaschine mit einem weiteren Drehteil, etwa einer Antriebswelle eines Nebenaggregats, wie eines Generators.

Der Pendelspanner 1 ist als Ringspanner ausgestaltet und wirkend. Dementsprechend weist der Pendelspanner 1 eine ringförmige Basiseinheit 2 auf, die im Betrieb auf übliche Weise fest an einem Generatorgehäuse angeordnet ist. Die Basiseinheit 2 weist, wie auch ein relativ zu ihr verdrehbarer, ringförmiger Spannarm 3, eine zentrale Öffnung 16 in Form eines Durchgangsloches auf. Dadurch kann der Pendelspanner 1 im Betrieb auf das Generatorgehäuse aufgeschoben werden.

Die Basiseinheit 2 weist einen Aufnahmeraum 14 auf, der zumindest eine, nämlich mehrere in Umfangsrichtung (in Bezug auf eine Drehachse 26 des Spannarmes 3) des Pendelspanners 1 verlaufende Bogenfedern 15 umhaust. Die Bogenfedern 15 sind in Umfangsrichtung zwischen einem Abschnitt der Basiseinheit 2 und einem Abschnitt des relativ zu der Basiseinheit 2 um die Drehachse 26 drehbar gelagerten Spannarmes 3 abgestützt / eingesetzt. Sowohl an der Basiseinheit 2 als auch am Spannarm 3 ist jeweils eine Spannrolle 17 rotatorisch / drehbar gelagert, welche Spannrolle 17 im Betrieb mit dem Endloszugmittel in Form des Riemens in Kontakt steht und aufgrund der Federkraft der Bogenfedern 15 mittels einer Vorspannkraft an das Endloszugmittel angedrückt ist.

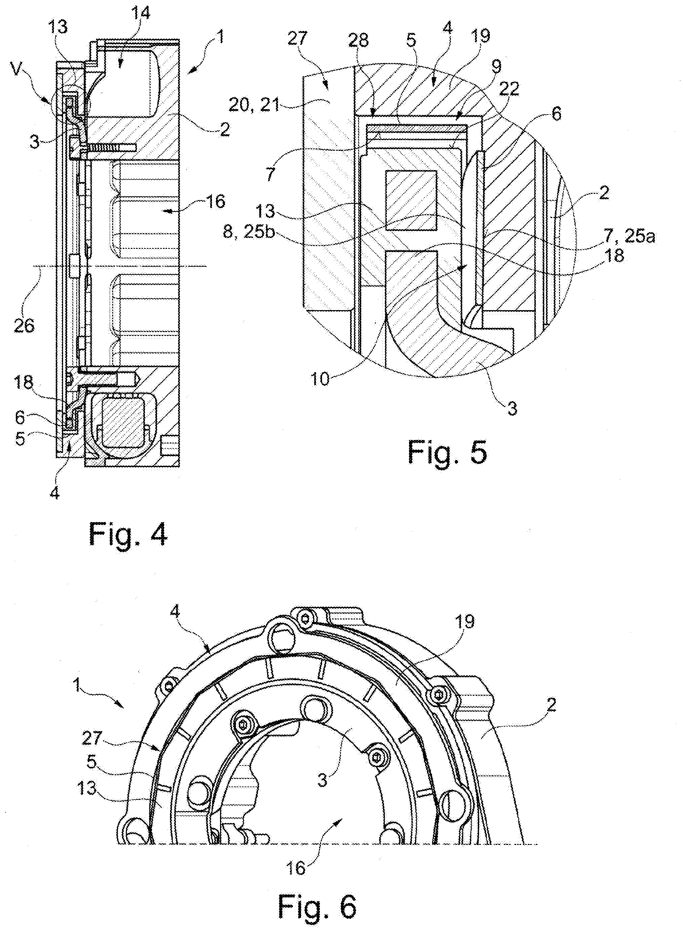

Wie in Verbindung der Fign. 2 bis 5 zu erkennen, ist zur Lagerung des Spannarmes 3 relativ zu der Basiseinheit 2 eine Gleitlagerung 27 / ein Gleitlager an dem Pendelspanner 1 vorgesehen. An der Basiseinheit 2 ist ein Gleitlagerungsbereich 4 der Gleitlagerung 27 zum Aufnehmen des Spannarmes 3 angeordnet / ausgebildet. Der Gleitlagerungsbereich 4 bildet zusammen mit einem radial außen liegenden / radial äußeren Flanschbereich 18 des Spannarmes 3 die Gleitlagerung 27 aus. Der Flanschbereich 18 weist einen vorzugsweise aus Kunststoff bestehenden Gleitbelag 13 auf, wobei der Gleitbelag besonders gut in den Fig. 3 und 5 zu erkennen ist. Der Gleitlagerungsbereich 4 ist im Wesentlichen durch einen rinnenförmig umlaufenden Lagerraum 28 der Basiseinheit 2 gebildet.

Der Gleitlagerungsbereich 4 der Basiseinheit 2 ist mit dem Aufnahmeraum 14 verbunden. Ein erster Abstützbereich 19 des Gleitlagerungsbereiches 4, der sich benachbart zu einer ersten axialen Seite des Spannarmes 3 nach radial innen hin erstreckt, sowie ein zweiter Abstützbereich 20 in Form eines Deckels 21, der sich benachbart zu einer, der ersten Seite entgegengerichteten, zweiten axialen Seite des Spannarmes 3 nach radial innen hin erstreckt, bilden den Lagerraum 28 gemeinsam aus. Der Deckel 21 ist wieder abnehmbar an dem ersten Abstützbereich 19 befestigt. In axialer Richtung zwischen den beiden Abstützbereichen 19, 20 ist der Flanschbereich 18 samt dem Gleitbelag 13 angeordnet. Von radial außen ist der Spannarm 3 zudem ebenfalls von dem ersten Abstützbereich 19 umgeben. Somit bildet die Basiseinheit 2 einen im Querschnitt betrachtet im Wesentlichen rinnenförmigen / U-förmigen Gleitlagerungsbereich 4 aus, der nach radial innen geöffnet ist und den Lagerraum 28 für den Flanschbereich 18 bildet, der an seinem radial äußeren Bereich mit dem Gleitbelag 13 hinein ragt.

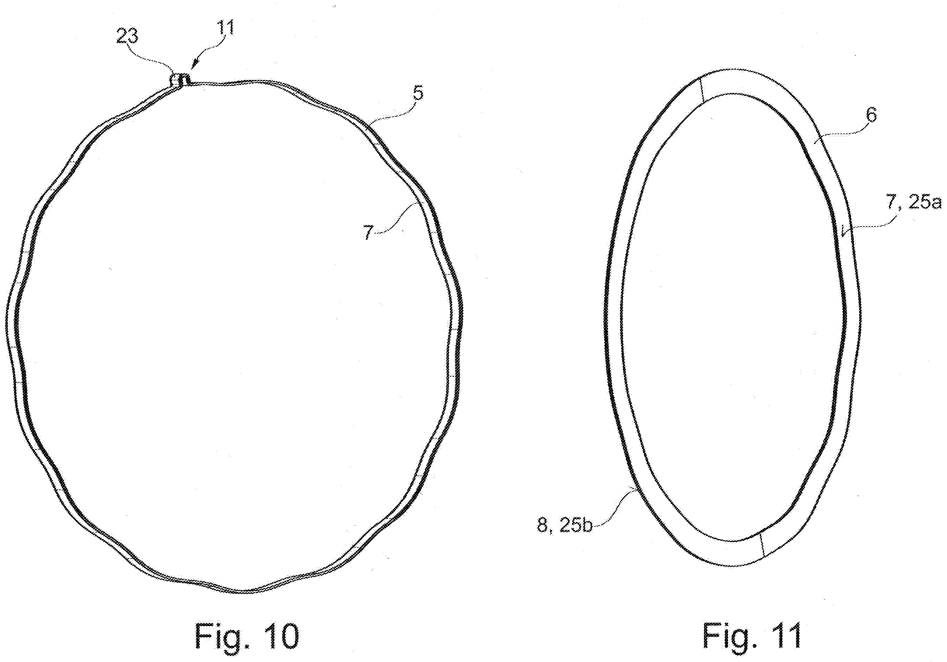

Wie in den Fign. 4 und 5 auch zu erkennen ist, ist in radialer Richtung zwischen einer radialen Außenseite 22 des Gleitbelages 13 / des Spannarmes 3 und dem ersten Abstützbereich 19 / dem Gleitlagerungsbereich 4 ein Radialspalt 9 ausgebildet. In diesen Radialspalt 9 ist erfindungsgemäß ein erstes Federelement 5 in Radialrichtung / radialer Richtung des Spannarmes 3 eingespannt / vorgespannt eingesetzt. Dieses erste Federelement 5 ist auch besonders gut in seiner Gesamtheit in Verbindung mit den Fign. 6 bis 9 sowie in alleiniger Betrachtung in Fig. 10 gut zu erkennen.

Das erste Federelement 5 ist ringförmig ausgestaltet (Fig. 10) und erstreckt sich entlang des Umfangs / in Umfangsrichtung des Pendelspanners 1 wellenförmig. Das erste Federelement 5 ist somit als Wellfeder ausgeformt. Ein Innendurchmesser sowie ein Außendurchmesser (aufgrund gleichbleibender Blechstärke) des ersten Federelementes 5 verändern sich wellenförmig (erweitert und wieder verringert) in der Umfangsrichtung des Pendelspanners 1 betrachtet. Durch dieses Einsetzen des ersten Federelementes 5 ist die Gleitlagerung 27 federvorgespannt, nämlich in Radialrichtung federvorgespannt. Das erste Federelement 5 ist dadurch in jeglichem Betriebszustand unter radialer Vorspannung, d.h. unter Aufbringung einer Radialvorspannung / Radialfederkraft, in den Radialspalt 9 eingesetzt / eingespannt. Ein Radialspiel ist zwischen dem Spannarm 3 und der Basiseinheit 2 ist damit behoben. Der Spannarm 3 ist stets relativ zu der Basiseinheit 2 in radialer Richtung ausgerichtet.

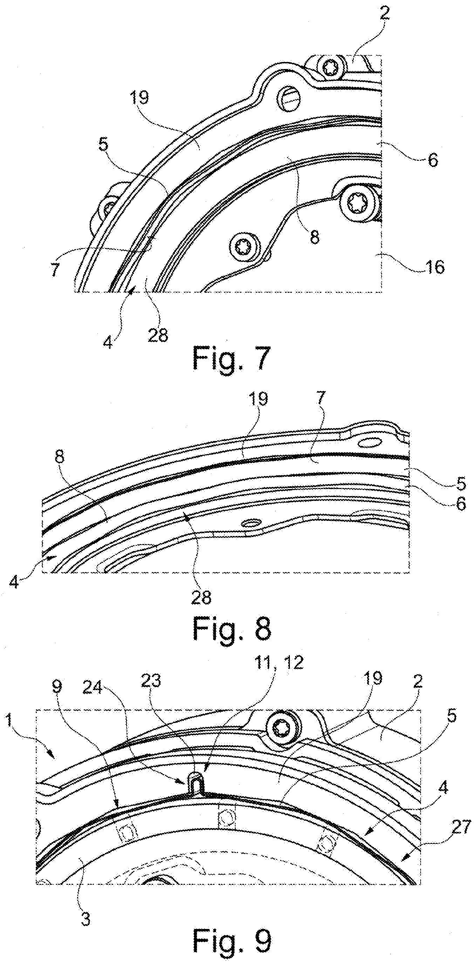

Das erste Federelement 6 weist zudem eine Verdrehsicherung 11 auf. Diese Verdrehsicherung ist durch eine in Radialrichtung verlaufende Ausbeulung 23 umgesetzt. Die Ausbeulung 23 ist formschlüssig in eine komplementär zu ihr ausgebildete (Fig. 9) Aussparung 24 in dem Gleitlagerungsbereich 4, nämlich in dem ersten Abstützbereich 19, eingesetzt. Dadurch ist eine formschlüssige Verbindung 12 realisiert, mittels der das erste Federelement 5 verdrehsicher zur Basiseinheit 2 gehalten / abgestützt ist. Mit seiner Außenumfangsseite liegt das erste ringförmig ausgebildete Federelement 5 somit im Betrieb verdrehfest an einer Innenumfangsseite des ersten Abstützbereiches 19 an. Mit seiner Innenumfangsseite hingegen ist das erste Federelement 5 als eine Gleitfläche, nachfolgend als erste Gleitfläche 7 bezeichnet, ausgestaltet. Die erste Gleitfläche 7 bildet eine hinsichtlich der gleitenden Lagerung des Spannarmes 2 / Gleitbelags 13 stofflich sowie geometrisch optimierte Oberfläche des ersten Federelementes 5 aus. An dieser ersten Gleitfläche 7 ist im Betrieb, wie wiederum in Fig. 5 bspw. gut zu erkennen ist, der Spannarm 3 gleitend entlang bewegbar (durch Verdrehung).

Des Weiteren ist in axialer Richtung zwischen dem ersten Abstützbereich 19 und dem Spannarm 3, nämlich zu der ersten axialen Seite des Spannarmes 3 hin, ein Axialspalt 10 ausgebildet. Auch in diesem Axialspalt 10 ist ein Federelement, nämlich ein zweites Federelement 6 eingesetzt.

Die Ausgestaltung des zweiten Federelementes 6 ist wiederum in Fig. 7 und 8 sowie separat in Fig. 11 erkennbar. Das zweite Federelement 6 ist scheibenförmig mit zentralem Durchgangsloch / ringscheibenförmig ausgestaltet. Auch das zweite Federelement 6 ist wie das erste Federelement 5 als Wellfeder ausgestaltet. Das zweite Federelement 6 ist jedoch so ausgeformt, dass seine axialen Seitenwände 25a, 25b / Stirnflächen in Umfangsrichtung wellenförmig verlaufen. Wie auch das erste Federelement 5, ist das zweite Federelement 6 aus einem Federblech aus Metall hergestellt und entlang des Umfangs betrachtet in seiner Blechdicke /-stärke gleichbleibend. Sowohl eine in zur ersten axialen Seite ausgerichtete erste Seitenwand 25a als auch eine zur zweiten axialen Seite ausgerichtete zweite Seitenwand 25b sind jeweils als erste bzw. zweite Gleitfläche 7, 8 ausgestaltet. Auch ist es möglich, das zweite Federelement 6 wiederum verdrehsicher an der Basiseinheit 2 (oder dem Spannarm 3) anzuordnen. In diesem Fall ist dann wiederum nur eine, vorzugsweise die dem Spannarm 3 zugewandte zweite Seitenwand 25b als (zweite) Gleitfläche 8 ausgebildet.

Das zweite Federelement 6 ist unter axialer Vorspannung, d.h. unter Aufbringung einer Axialvorspannung / Axialfederkraft, in den Axialspalt 10 eingesetzt / eingespannt. Das zweite Federelement 6 bringt eine derartige Federkraft auf den Gleitlagerungsbereich 4 sowie auf den Spannarm 3 auf, dass der Spannarm 3 spielfrei in axialer Richtung relativ zu dem Gleitlagerungsbereich 4 aufgenommen ist. Durch diese Ausgestaltung wird eine sowohl in Axialrichtung als auch in Radialrichtung umgesetzte spielfreie Aufnahme des Spannarmes 3 realisiert.

In anderen Worten ausgedrückt, wird gemäß der vorliegenden Erfindung, um ein radiales Spiel aus der Lagerung (Gleitlagerung 27) zu nehmen, zusätzliches Spiel vorgesehen und in diesen Bauraum eine umlaufende Wellfeder (erstes Federelement 5) eingesetzt, welche unter einer gewissen Vorspannung steht. Somit ist gewährleistet, dass sich der Spanner 1 in der Lagerung 27 radial nicht frei bewegen kann. Nach dem gleichen Prinzip kommt auch eine axiale Wellfeder (zweites Federelement 6) zur Anwendung, welches das Spiel in Axialrichtung eliminiert. Auch diese Feder 6 steht unter leichter Vorspannung. Die Federnsteifigkeiten sind so ausgelegt, dass deren Eigenfrequenzen oberhalb der Betriebsfrequenzen des Pendelspanners 1 liegen und es zu keinem Aufschwingvorgang mehr kommt. Ferner bieten die Federn 5, 6 den Vorteil, die Pendeldämpfung gezielt einstellen zu können, je nach gewählter Vorspannung.

### Bezugszeichenliste

- 1: Pendelspanner
- 2: Basiseinheit
- 3: Spannarm
- 4: Gleitlagerungsbereich
- 5: erstes Federelement
- 6: zweites Federelement
- 7: erste Gleitfläche
- 8: zweite Gleitfläche
- 9: Radialspalt
- 10: Axialspalt
- 11: Verdrehsicherung
- 12: formschlüssige Verbindung
- 13: Gleitbelag
- 14: Aufnahmeraum
- 15: Bogenfeder
- 16: Öffnung
- 17: Spannrolle
- 18: Flanschbereich
- 19: erster Abstützbereich
- 20: zweiter Abstützbereich
- 21: Deckel
- 22: Außenseite
- 23: Ausbeulung
- 24: Aussparung
- 25a: erste Seitenwand
- 25b: zweite Seitenwand
- 26: Drehachse
- 27: Gleitlagerung
- 28: Lagerraum

## Patentansprüche

1. Pendelspanner (1) für einen Endloszugmitteltrieb einer Verbrennungskraftmaschine, mit einer Basiseinheit (2) und einem dazu separaten, ringförmig ausgebildeten Spannarm (3), der in einem Gleitlagerungsbereich (4) der Basiseinheit (2) zum Ermöglichen einer Drehbewegung relativ zu der Basiseinheit (2) gleitend gelagert ist, **gekennzeichnet durch** zumindest ein Federelement (5, 6), das in einem Radialspalt (9) und/oder in einem Axialspalt (10) zwischen dem Gleitlagerungsbereich (4) und dem Spannarm (3) eingesetzt ist und die Basiseinheit (2) und den Spannarm (3) gegeneinander verspannt.

2. Pendelspanner (1) nach Anspruch 1, **dadurch gekennzeichnet, dass** das zumindest eine Federelement (5, 6) eine als Gleitfläche (7, 8) ausgelegte Oberfläche besitzt.

3. Pendelspanner (1) nach Anspruch 1 oder 2, **dadurch gekennzeichnet, dass** das zumindest eine Federelement (5, 6) eine Federkraft in Radialrichtung und/oder in Axialrichtung zwischen der Basiseinheit (2) und dem Spannarm (3) aufbringt.

4. Pendelspanner (1) nach einem der Ansprüche 1 bis 3, **dadurch gekennzeichnet, dass** ein erstes Federelement (5) in einem Radialspalt (9) zwischen dem Gleitlagerungsbereich (4) und dem Spannarm (3) angeordnet ist und ein zweites Federelement (6) in einem Axialspalt (10) zwischen dem Gleitlagerungsbereich (4) und dem Spannarm (3) angeordnet ist.

5. Pendelspanner (1) nach einem der Ansprüche 1 bis 4, **dadurch gekennzeichnet, dass** das zumindest eine Federelement (5, 6) eine Wellfeder ist.

6. Pendelspanner (1) nach einem der Ansprüche 1 bis 5, **dadurch gekennzeichnet, dass** das zumindest eine Federelement (5, 6) ringförmig oder scheibenförmig ausgestaltet ist.

7. Pendelspanner (1) nach einem der Ansprüche 1 bis 6, **dadurch gekennzeichnet, dass** das zumindest eine Federelement (5, 6) mittels einer Verdrehsicherung (11) mit dem Gleitlagerungsbereich (4) oder dem Spannarm (3) verbunden ist.

8. Pendelspanner (1) nach Anspruch 7, **dadurch gekennzeichnet, dass** das zumindest eine Federelement (5, 6) durch eine formschlüssige Verbindung (12) an dem Gleitlagerungsbereich (4) oder dem Spannarm (3) verdrehsicher festgelegt ist.

9. Pendelspanner (1) nach einem der Ansprüche 1 bis 8, **dadurch gekennzeichnet, dass** das zumindest eine Federelement (5, 6) an einem Gleitbelag (13) des Spannarmes (3) abgestützt ist.

## Claims

1. A pendulum tensioner (1) for an endless traction mechanism drive of an internal combustion engine, comprising a base unit (2) and a separate, annular tensioning arm (3), which is mounted to slide in a slide bearing region (4) of the base unit (2) to enable a rotational movement relative to the base unit (2), **characterised by** at least one spring element (5, 6) which is inserted in a radial gap (9) and/or in an axial gap (10) between the slide bearing region (4) and the tensioning arm (3), and braces the base unit (2) and the tensioning arm (3) against each other.

2. The pendulum tensioner (1) according to claim 1, **characterised in that** the at least one spring element (5, 6) has a surface designed as a sliding surface (7, 8).

3. The pendulum tensioner (1) according to claim 1 or 2, **characterised in that** the at least one spring element (5, 6) applies a spring force in the radial direction and/or in the axial direction between the base unit (2) and the tensioning arm (3).

4. The pendulum tensioner (1) according to one of claims 1 to 3, **characterised in that** a first spring element (5) is arranged in a radial gap (9) between the slide bearing region (4) and the tensioning arm (3) and a second spring element (6) in an axial gap (10) is arranged between the slide bearing region (4) and the tensioning arm (3).

5. The pendulum tensioner (1) according to one of claims 1 to 4, **characterised in that** the at least one spring element (5, 6) is a wave spring.

6. The pendulum tensioner (1) according to one of claims 1 to 5, **characterised in that** the at least one spring element (5, 6) is annular or disc-like.

7. The pendulum tensioner (1) according to one of claims 1 to 6, **characterised in that** the at least one spring element (5, 6) is connected to the slide bearing region (4) or the tensioning arm (3) by means of an anti-rotation device (11).

8. The pendulum tensioner (1) according to claim 7, **characterised in that** the at least one spring element (5, 6) is secured to the slide bearing region (4) or the tensioning arm (3) in a rotationally fixed manner by a form-fitting connection (12).

9. The pendulum tensioner (1) according to one of claims 1 to 8, **characterised in that** the at least one spring element (5, 6) is supported on a sliding lining (13) of the tensioning arm (3).

## Revendications

1. Tendeur oscillant (1) pour un mécanisme de traction sans fin d'un moteur à combustion interne, comportant une unité de base (2) et un bras de tension (3) annulaire séparé de cette dernière, qui est monté coulissant sur une zone de montage coulissant (4) de l'unité de base (2) pour permettre une rotation par rapport à l'unité de base (2), **caractérisé par** au moins un élément ressort (5, 6) qui est inséré dans un espace radial (9) et/ou dans un espace axial (10) entre la zone de montage coulissant (4) et le bras de tension (3) et qui serre l'unité de base (2) et le bras de tension (3) l'un contre l'autre.

2. Tendeur oscillant (1) selon la revendication 1, **caractérisé en ce que** ledit élément ressort (5, 6) a une surface conçue comme une surface coulissante (7, 8).

3. Tendeur oscillant (1) selon la revendication 1 ou 2, **caractérisé en ce que** ledit élément ressort (5, 6) applique une force de ressort dans le sens radial et/ou dans le sens axial entre l'unité de base (2) et le bras de tension (3).

4. Tendeur oscillant (1) selon l'une quelconque des revendications 1 à 3, **caractérisé en ce qu'**un premier élément ressort (5) est disposé dans un espace radial (9) entre la zone de montage coulissant (4) et le bras de tension (3) et un second élément ressort (6) est disposé dans un espace axial (10) entre la zone de montage coulissant (4) et le bras de tension (3).

5. Tendeur oscillant (1) selon l'une quelconque des revendications 1 à 4, **caractérisé en ce que** ledit élément ressort (5, 6) est un ressort ondulé.

6. Tendeur oscillant (1) selon l'une quelconque des revendications 1 à 5, **caractérisé en ce que** ledit élément ressort (5, 6) est conçu en forme d'anneau ou de disque.

7. Tendeur oscillant (1) selon l'une quelconque des revendications 1 à 6, **caractérisé en ce que** ledit élément ressort (5, 6) est relié à la zone de montage coulissant (4) ou au bras de tension (3) au moyen d'un dispositif anti-rotation (11).

8. Tendeur oscillant (1) selon la revendication 7, **caractérisé en ce que** ledit élément ressort (5, 6) est fixé contre la rotation par une liaison par complémentarité de forme (12) sur la zone de montage coulissant (4) ou le bras de tension (3).

9. Tendeur oscillant (1) selon l'une quelconque des revendications 1 à 8, **caractérisé en ce que** ledit élément ressort (5, 6) est supporté sur un revêtement coulissant (13) du bras de tension (3).
